(19) Europäisches Patentamt
European Patent Office
Office européen des brevets

(11) EP 4 763 882 A1

(12) **EUROPÄISCHE PATENTANMELDUNG**

(43) Veröffentlichungstag:
24.06.2026 Patentblatt 2026/26

(21) Anmeldenummer: 24222060.6

(22) Anmeldetag: **20.12.2024**

(51) Internationale Patentklassifikation (IPC):
$C08G\ 18/48\ ^{(2006.01)}$    $C08G\ 18/22\ ^{(2006.01)}$
$B32B\ 15/14\ ^{(2006.01)}$    $B32B\ 27/40\ ^{(2006.01)}$
$C08G\ 18/32\ ^{(2006.01)}$    $C08G\ 18/66\ ^{(2006.01)}$
$C08G\ 18/76\ ^{(2006.01)}$    $C08G\ 18/08\ ^{(2006.01)}$
$C08J\ 5/18\ ^{(2006.01)}$    $C09D\ 175/08\ ^{(2006.01)}$

(52) Gemeinsame Patentklassifikation (CPC):
**C08G 18/4841; B32B 15/14; B32B 27/40;**
**C08G 18/0895; C08G 18/222; C08G 18/3206;**
**C08G 18/4808; C08G 18/4825; C08G 18/6674;**
**C08G 18/7671; C08J 5/18;** C08J 2375/08;
C09D 175/08

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(71) Anmelder: **Covestro Deutschland AG**
**51373 Leverkusen (DE)**

(72) Erfinder:
• **REICHERT, Peter**
**41541 Dormagen (DE)**
• **KESSLER, Michael**
**51377 Leverkusen (DE)**

• **SHEN, Yi**
**41541 Dormagen (DE)**
• **PETERSON, Ralf**
**41352 Korschenbroich (DE)**
• **SCHEER, Martin**
**41539 Dormagen (DE)**
• **KRODER, Nico**
**41540 Dormagen (DE)**
• **THEISEN, David**
**41542 Dormagen (DE)**
• **SCHELLER, Mark**
**50769 Köln (DE)**

(74) Vertreter: **Levpat**
**c/o Covestro AG**
**Gebäude K12**
**51365 Leverkusen (DE)**

(54) **POLYETHER-BASIERTE THERMOPLASTISCHE POLYURETHANE UND DARAUF BASIERENDE WASSERDAMPFDURCHLÄSSIGE VERBUNDTEILE**

(57) Die Erfindung betrifft ein Polyether-basiertes thermoplastisches Polyurethan, dessen Herstellung und Verwendung zur Herstellung von Filmen, Folien und Beschichtungen, sowie wasserdampfdurchlässige, flächige Verbundteile umfassend mindestens zwei Schichten, wobei mindestens eine Schicht aus dem erfindungsgemäßen Polyether-basierten thermoplastischen Polyurethan besteht, und deren Verwendung zur Herstellung von Dachunterspannbahnen und Fassadenspannbahnen.

EP 4 763 882 A1

**Beschreibung**

Die Erfindung betrifft ein Polyether-basiertes thermoplastisches Polyurethan, dessen Herstellung und Verwendung zur Herstellung von Filmen, Folien und Beschichtungen, sowie wasserdampfdurchlässige, flächige Verbundteile umfassend mindestens zwei Schichten, wobei mindestens eine Schicht aus dem erfindungsgemäßen Polyether-basierten thermoplastischen Polyurethan besteht, und deren Verwendung zur Herstellung von Dachunterspannbahnen und Fassadenspannbahnen.

Thermoplastische Polyurethanelastomere (TPU) sind von technischer Bedeutung, da sie ausgezeichnete mechanische Eigenschaften zeigen und sich kostengünstig thermoplastisch verarbeiten lassen. Durch die Verwendung unterschiedlicher chemischer Aufbaukomponenten lassen sich ihre mechanischen Eigenschaften über einen großen Bereich variieren. Zusammenfassende Darstellungen von TPU, ihren Eigenschaften und Anwendungen finden sich in Kunststoffe 68 (1978), S. 819-825 und Kautschuk, Gummi, Kunststoffe 35 (1982), S. 568-584.

TPU werden aus linearen Polyolen, meist Polyester- oder Polyetherpolyolen, organischen Diisocyanaten und kurzkettigen Diolen (Kettenverlängerern) aufgebaut. Zur Beschleunigung der Bildungsreaktion können zusätzlich Katalysatoren zugesetzt werden. Die molaren Verhältnisse der Aufbaukomponenten können über einen breiten Bereich variiert werden, wodurch sich die Eigenschaften des Produkts einstellen lassen. Je nach molaren Verhältnissen von Polyolen zu Kettenverlängerern ergeben sich Produkte in einem weiten Shore-Härte-Bereich. Der Aufbau der thermoplastisch verarbeitbaren Polyurethanelastomeren kann entweder schrittweise (wie z.B. im Prepolymerverfahren) oder durch die gleichzeitige Reaktion aller Komponenten in einer Stufe erfolgen (one-shot-Verfahren). Beim Prepolymerverfahren wird aus dem Polyol und dem Diisocyanat ein isocyanathaltiges Prepolymer gebildet, das in einem zweiten Schritt mit dem Kettenverlängerer umgesetzt wird. Die TPU können kontinuierlich oder diskontinuierlich hergestellt werden. Die bekanntesten technischen Herstellverfahren sind das Bandverfahren und das Extruderverfahren.

Neben Katalysatoren können den TPU-Aufbaukomponenten auch Hilfsmittel und Zusatzstoffe zugesetzt werden.

Vor allem in der Textil- und in der Bauindustrie werden TPU in Form von extrudierten Folien eingesetzt. Im Verbund mit Textilschichten oder vliesartigen Geweben finden sie Anwendung in wetterfesten Kleidungsstücken, Zeltbahnen, Dachunterspannbahnen oder Fassadenspannbahnen (Verbundteile). Aufgabe des TPU ist es hierbei jeweils, einerseits als Barriere für Wasser in flüssiger Form (z.B. Regen) zu wirken und andererseits Wasser im gasförmigen Zustand vom Innenraum an den Außenraum abzugeben, um ein möglichst angenehmes Innenraumklima zu erhalten. Im Gegensatz zu anderen Materialien kann TPU diese Doppelfunktion ohne Erzeugung von Mikroporen in der TPU-Schicht erfüllen.

Von entscheidender Bedeutung sind neben einer guten Wasserdampfdurchlässigkeit derartiger Verbundteile und damit der TPU-Schicht eine möglichst niedrige Quellung der im Verbundteil verwendeten TPU-Folien. Eine zu stark ausgeprägte Quellneigung der TPU-Folie erhöht die Gefahr einer Ablösung der TPU-Folie vom zum Verbund gehörenden anderen Schichten (z.B. Vlies), auch Unterbau genannt. Infolge dieser Ablösung sind die zumeist sehr dünnen TPU-Folien zusätzlich der Gefahr von Schädigungen in Form von z.B. Rissbildungen ausgesetzt.

Bislang wurden für hohe Ansprüche hinsichtlich Wasserdampfdurchlässigkeit fast ausschließlich TPU auf Basis von Polytetramethylenglycolethern eingesetzt. Diese TPU weisen zwar ein gutes Eigenschaftsprofil auf, ihre Rohstoffbasis ist aber vergleichsweise teuer und weisen eine im Vergleich zu Polyethylen- / Polypropylenglycolethern basierten TPU eine deutlich schlechtere $CO_2$ Bilanz auf. Dies liegt an dem mehrstufigen Verfahren was zu Herstellung der Monomere zur Herstellung der Polytetramethylenglycole nötig ist

Sehr hohe Wasserdampfdurchlässigkeiten sind mit TPU erzielbar, die ausschließlich auf Polyethylenglycolethern basieren. Diese TPU sind jedoch nicht für Dachunterspannbahnen einsetzbar, da sie sich infolge starker Quellung sehr leicht vom Folienunterbau (z.B. vom Vlies) ablösen. Sie werden daher, wie z.B. in WO2000/039179 beschrieben, vorzugsweise in Superabsorbern eingesetzt.

In EP-A 1366100 werden Polyether-basierte TPU beschrieben, in denen die Polyetherpolyolkomponenten statistisch aufgebaut vorliegen und mehr als 75 Gew.-% Propylenoxideinheiten enthalten. Die verwendeten Polyetherpolyolkomponenten, die in Gegenwart eines Doppelmetallcyanid-Katalysators hergestellt werden, weisen einen hohen Gehalt an sekundären Hydroxylgruppen von 51-100% sowie Molmassen von 600-1500 auf. Diese Polyetherpolyolkomponenten reduzieren die Phasenseparation zwischen der TPU-Hartsegment- (aus dem Isocyanat und dem Kettenverlängerer) und der TPU-Weichsegmentphase (aus dem Polyol), wodurch die Wasserdampfdurchlässigkeit dieser TPU-Materialien zu schlecht ist.

Die US-A 4202957 beschreibt TPU aus 4,4'-Diphenylmethandiisocyanat, einem bis zwei Kettenverlängerern und Blockcopolymeren aus Polyoxyethylen- und Polyoxypropyleneinheiten, die durch Aufpolymerisieren von Ethylenoxid auf Polypropylenoxid erhalten werden und Molmassen von 1000-3000 sowie einen Gehalt an primären Hydroxylgruppen von mindestens 50% aufweisen. Um die gewünschten Eigenschaften, insbesondere eine verbesserte thermische Stabilität der TPU zu erhalten, müssen die Ethylenoxid-Blöcke der Blockcopolymere eine bestimmte Mindestlänge überschreiten. Der dafür benötigte Mindestanteil an Ethylenoxideinheiten (EO%) ergibt sich aus der Formel EO% = (MW-900)/4*3*100/MW (mit MW= Molmasse des Blockcopolymers). Die beschriebenen TPU sind nur sehr bedingt für wasserdampfdurchlässige Verbundteile einsetzbar, weil sie je nach Molmasse des eingesetzten Blockcopolymers entweder eine hohe Quellneigung aufweisen oder ihre Wasserdampfdurchlässigkeit zu gering ist.

EP-A 0881244 offenbart ein Verfahren zur Herstellung von TPU, wobei zur Verbesserung der Reaktivität der Polyolkomponente sowie zur Verbesserung des mechanischen Eigenschaftsprofils der TPU Polyetherpolyalkohole mit Polyoxyethylen- und Polyoxypropyleneinheiten eingesetzt werden, die einen hohen Gehalt an primären Hydroxylgruppen von 80-100% aufweisen. Es handelt sich hierbei um Blockcopolymere aus Polyoxyethylen- und Polyoxypropyleneinheiten. Der hohe Gehalt an primären Hydroxylgruppen wird benötigt, um eine ausreichende Reaktivität der Polyole gegenüber Isocyanaten zu gewährleisten. Die TPU sind dadurch vergleichsweise teuer. Zudem neigen sie zu einer starken Quellung.

In WO 2008/007046 werden Wirkstoff-haltige Polymere aus einem Diisocyanat, einem Kettenverlängerer, einem Polyethylenglykol-Polypropylenglykol-Polyethylenglykol-Blockcopolymer oder einem Polypropylenglykol-Polyethylenglykol-Polypropylenglykol-Blockcopolymer und Polyethylenglykol oder Polypropylenglykol hergestellt, wobei die Freisetzungsrate des im Polymer enthaltenen Wirkstoffs über die Zusammensetzung des Polymers gesteuert wird. Die Polymere mit Blöcken aus Polyethylenglykol neigen zu einer starken Quellung.

Die EP-A 0748828 beschreibt ein Verfahren, bei dem Isocyanat-Komponenten und ein oder mehrere Kettenverlängerer mit einem Polyoxyalkylenpolyol, das eine Polyoxypropylen-Komponente umfasst, umgesetzt werden. Bei den Polyoxyalkylenpolyolen handelt es sich vorzugsweise um Polyoxypropylen/Polyoxyethylen-Blockcopolymere mit bis zu 30 Gew.-% Oxyethyleneinheiten, die als EO-CAP vorliegen. Die Polyurethane auf Basis der genannten Blockcopolymere neigen zu einer starken Quellung.

WO2016005300A1 beschreibt die Nutzung einer Polyolmischung mit einem bestimmten EO-Gehalt, wobei ein kritischer EO-Gehalt der Rezeptur in Abhängigkeit vom Hartsegmentanteil definiert wird um die Quellung bei Raumtemperatur gering zu halten.

Da es auch bei niedrigen Temperaturen zur Quellung kommt, ist neben der Quellung bei Raumtemperatur auch die Quellung bei niedrigen Temperaturen ein wesentlicher Aspekt für die Anwendung entsprechender TPU in Verbundteilen, die als Dachunterspannbahnen oder Fassadenspannbahnen Verwendung finden. Auf Quellung bei niedrigen Temperauturen nimmt die WO2016005300A1 keinen Bezug.

EP3166792B1 beschreibt die Nutzung einer Polyolmischung aus Polyestern und EO-haltigen Polyethern, wobei ein kritischer EO-Gehalt der Rezeptur in Abhängigkeit vom Hartsegmentanteil und Polyesteranteil definiert wird. Nachteil dieser Rezepturen ist, dass die Ester in diesen Rezepturen zur Hydrolyse neigen.

Aufgabe der vorliegenden Erfindung war es ein TPU zur Verfügung zu stellen, das auf Rohstoffen basiert, die vergleichsweise kostengünstig sind und sich zudem durch eine gute $CO_2$-Bilanz auszeichnen, und das eine hohe Wasserdampfdurchlässigkeit bei gleichzeitig niedriger Quellung bei Raumtemperatur als auch bei niedrigen Temperaturen aufweist.

Oftmals ändern TPU-Schmelzen bei längerer Verweilzeit auf dem Extruder ihr Verarbeitungsverhalten drastisch, so dass sie nur noch schlecht thermoplastisch verarbeitet werden können. Dies äußert sich dadurch, dass nach längerem Stillstand des Extruders bei Wiederanfahrt neben der üblichen abgebauten Polymerschmelze ein klumpen- oder schollenähnliches Material ausgespült wird (nachfolgend als Chunking bezeichnet), das sehr schwer vollständig aus dem Extruder ausgespült werden kann und dadurch die Wiederanfahrt verzögert oder gar unmöglich macht. Die Behebung dieses Problems war eine weitere Aufgabe der vorliegenden Erfindung.

Diese Aufgaben konnten durch das nachfolgend beschriebene thermoplastische Polyurethan gelöst werden.

Gegenstand der Erfindung ist ein thermoplastisches Polyurethan, das erhältlich ist aus der Umsetzung einer Zusammensetzung bestehend aus den Komponenten:

A) einem oder mehreren organischen Diisocyanaten,

B) einem oder mehreren Diolen mit jeweils einem Molekulargewicht von ≥ 60 bis ≤ 490 g/mol als Kettenverlängerer,

C) i) einem oder mehreren Polyetherpolyolen mit jeweils einem zahlenmittleren Molekulargewicht von ≥ 500 bis ≤ 5000 g/mol, von denen mindestens ein Polyetherpolyol (C1) aus Ethylenoxid- und Propylenoxideinheiten aufgebaut ist, wobei i) kein Polyetherpolyol (C2) enthält, das aus Propylenoxideinheiten aufgebaut ist,

ii) mehreren Polyetherpolyolen mit jeweils einem zahlenmittleren Molekulargewicht von ≥ 500 bis ≤ 5000 g/mol, von denen mindestens ein Polyetherpolyol (C1) aus Ethylenoxid- und Propylenoxideinheiten aufgebaut ist und mindestens ein Polyetherpolyol (C2) aus Propylenoxideinheiten aufgebaut ist,
oder

iii) einem oder mehreren Polyetherpolyolen mit jeweils einem zahlenmittleren Molekulargewicht von ≥ 500 bis ≤ 5000 g/mol, von denen mindestens ein Polyetherpolyol (C2) aus Propylenoxideinheiten aufgebaut ist, wobei iii) kein Polyetherpolyol (C1) enthält, das aus Ethylenoxid- und Propylenoxideinheiten aufgebaut ist,

wobei die zahlenmittlere Funktionalität der Komponente C) von $\geq$ 1,8 bis $\leq$ 2,5 beträgt,

D) gegebenenfalls einem oder mehreren Polyesterpolyolen mit jeweils einem zahlenmittleren Molekulargewicht von $\geq$ 500 bis $\leq$ 5000 g/mol, wobei die zahlenmittlere Funktionalität der Komponente D) von $\geq$ 1,8 bis $\leq$ 2,5 beträgt,

E) gegebenenfalls einem oder mehreren Katalysatoren,

F) gegebenenfalls einem oder mehreren Hilfs- und/oder Zusatzstoffen,

wobei das Molverhältnis der NCO-Gruppen in A) zu den NCO-reaktiven Gruppen in B), C) und D) von $\geq$ 0,9:1 bis $\leq$ 1,1:1 beträgt,
dadurch gekennzeichnet,
dass der Gehalt an Ethylenoxideinheiten in der Komponente C)

-   in den Ausführungsformen i) und ii) von > 0 bis $\leq$ 20 Gew.-%, bevorzugt von > 0 bis $\leq$ 17 Gew.-%, besonders bevorzugt von > 0 bis $\leq$ 15 Gew.-%, bezogen auf das Gesamtgewicht der Komponente C), beträgt, und
-   in Ausführungsform iii) von $\geq$ 0 bis $\leq$ 20 Gew.-%, bevorzugt von $\geq$ 0 bis $\leq$ 15 Gew.-%, besonders bevorzugt 0 Gew.-%, bezogen auf das Gesamtgewicht der Komponente C), beträgt,

dass das Gesamtmolekulargewicht der Komponente C $\leq$ 1900 g/mol, bevorzugt $\leq$ 1800 g/mol beträgt,
und dass das thermoplastische Polyurethan eine Theoretische Härte (TH) im Bereich von $\geq$ 17 bis $\leq$ 39, bevorzugt 20 bis 36, besonders bevorzugt 24 bis 34 aufweist.

Der Gehalt an Ethylenoxideinheiten wird mittels 13C-NMR ermittelt. Dabei werden die Integrale der Resonanzen der Propylenoxid (PO)-Kohlenstoffe und die Integrale der Resonanzen der Kohlenstoffe in den EO-Einheiten ins Verhältnis gesetzt, um den EO-Gehalt der Probe in Gewichtsprozent auf einer additiv- und starterfreien Basis zu berechnen. Die Spektren werden mittels eines Bruker AV III HD 600 Spektrometer ermittelt. Als Lösemittel dient deuteriertes Chloroform (CDCl3).
Die zahlenmittleren Molekulargewichte der einzelnen Polyether und Polyester werden durch Endgruppentitration bestimmt. Dazu wird ihre OH-Zahl gemäß der Vorschrift DIN 53240-2 (2007) bestimmt. Das zahlenmittlere Molekulargewicht wird dann nach folgender Gleichung berechnet:

$$Mn = 1000mg/g * \frac{z * 56.106g/Mol}{OHZ[mg/g]} \quad ,$$

wobei z die zahlenmittlere Funktionalität des Polyethers bzw. Polyesters ist (bei den hier verwendeten Polyetherpolyolen und Polyesterpolyolen wird z = 2 angenommen).
Das Gesamtmolekulargewicht der Komponente C ist definiert als:
Summe aus den Produkten der Stoffmengen und der zahlenmittleren Molekulargewichte der einzelnen Polyetherpolyole der Komponente C, dividiert durch die Summe der Stoffmengen der einzelnen Polyetherpolyole der Komponente C.
Die Theoretische Härte berechnet sich über folgende Formel:

$$TH = (n(Kettenverlängerer)*[M(Diisocyanat)+M(Kettenverlängerer)])/m_{gesamt}$$

mit n = Stoffmengen der Komponenten, M = molare Masse der Komponenten und m = Massen der Komponenten.
Die erfindungsgemäßen TPU eignen sich aufgrund ihrer guten Wasserdampfdurchlässigkeit bei gleichzeitig geringer Quellung und guter Extrudierbarkeit hervorragend zur Herstellung von flächigen Verbundteilen, die z.B. als oder zur Herstellung von Dachunterspannbahnen und Fassadenspannbahnen Verwendung finden.
Als organische Diisocyanate A) kommen vorzugsweise aliphatische, cycloaliphatische, araliphatische, heterocyclische und aromatische Diisocyanate in Betracht, wie sie in Justus Liebigs Annalen der Chemie, 562, S.75-136 beschrieben werden.
Im Einzelnen seien beispielhaft genannt: aliphatische Diisocyanate, wie 1,6-Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexandiisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, Isophorondiisocyanat, 4,4'-Dicyclohexylmethandiisocyanat, 1,5-Naphthylendiisocyanat und Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,6-Hexamethylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenyl-polymethylen-polyisocyanaten.

Das Molverhältnis der NCO-Gruppen in A) zu den NCO-reaktiven Gruppen in B), C) und D) beträgt vorzugsweise von $\geq$ 0,9:1 bis $\leq$ 1,1:1, mehr bevorzugt von $\geq$ 0,95:1 bis $\leq$ 1,05:1, am meisten bevorzugt $\geq$ 0,98:1 bis $\leq$ 1,02:1.

Als Kettenverlängerer B) werden ein oder mehrere Diole mit einem Molekulargewicht von $\geq$ 60 bis $\leq$ 490 g/mol eingesetzt, vorzugsweise aliphatische Diole mit vorzugsweise 2 bis 14 Kohlenstoffatomen, wie z.B. Ethandiol, 1,2-Propandiol, 1,3-Propandiol, Butandiol, Hexandiol, Diethylenglykol, Dipropylenglykol, insbesondere aliphatische Diole mit vorzugsweise 2 bis 8 Kohlenstoffatomen, bevorzugt 1,4-Butandiol und 1,6-Hexandiol. Geeignet sind jedoch auch Diester der Terephthalsäure mit Glykolen mit 2 bis 4 Kohlenstoffatomen, wie z.B. Terephthalsäure-bisethylenglykol oder Terephthalsäure-bis-1,4-butandiol, Hydroxyalkylenether des Hydrochinons, wie z.B. 1,4-Di(-betahydroxyethyl)-hydrochinon und ethoxylierte Bisphenole, wie z.B. 1,4-Di-(betahydroxyethyl)-bisphenol A. Es können auch Gemische der oben genannten Kettenverlängerer eingesetzt werden, insbesondere zwei verschiedene, besonders bevorzugt aliphatische, Kettenverlängerer, insbesondere 1,4-Butandiol und 1,6-Hexandiol. Daneben können auch kleinere Mengen an Triolen zugesetzt werden.

Geeignete Polyetherpolyole für die Komponente C) können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherpolyole sind ferner die hydroxylgruppenhaltigen Polymerisationsprodukte des 1,3-Propandiol und des Tetrahydrofurans. Es können auch trifunktionelle Polyether eingesetzt werden, jedoch höchstens in solcher Menge, dass ein thermoplastisch verarbeitbares Produkt entsteht und die zahlenmittlere Funktionalität der Summe aller Polyetherpolyole unter C) $\geq$ 1,8 bis $\leq$ 2,5 beträgt. Die vorzugsweise im wesentlichen linearen Polyetherpolyole besitzen zahlenmittlere Molekulargewichte von $\geq$ 500 bis $\leq$ 3000 g/mol, bevorzugt $\geq$ 800 bis $\leq$ 2300 g/mol.

Die Komponente C) enthält

in einer ersten Ausführungsorm i) mindestens ein Polyetherpolyol C1), welches aus Ethylenoxideinheiten (auch als Oxyethyleneinheiten bezeichnet) und Propylenoxideinheiten (auch als Oxypropyleneinheiten bezeichnet) aufgebaut ist,

in einer zweiten Ausführungsform ii) mindestens ein Polyetherpolyol (C1), welches aus Ethylenoxid- und Propylenoxideinheiten aufgebaut ist und mindestens ein Polyetherpolyol (C2), welches aus Propylenoxideinheiten aufgebaut ist, und

in einer dritten Ausführungsform iii) mindestens ein Polyetherpolyol (C2), welches aus Propylenoxideinheiten aufgebaut ist.

Bei dem mindestens einen Polyetherpolyol C1) handelt es sich um ein Polyetherpolyol aufgebaut aus Ethylenoxideinheiten (-(O-CH$_2$-CH$_2$-) und 1,2-Propylenoxideinheiten (-(O-CH(CH$_3$)-CH$_2$-), aus Ethylenoxideinheiten und 1,3-Propylenoxideinheiten (-(O-CH$_2$-CH$_2$-CH$_2$-)-) oder aus Ethylenoxideinheiten, 1,3-Propylenoxideinheiten und 1,2-Propylenoxideinheiten, bevorzugt aus Ethylenoxideinheiten und 1,2-Propylenoxideinheiten. Dies gilt für beide Ausführungsformen i) und ii).

In einer bevorzugten Ausfuhrungsform der Ausfuhrungsform i) besteht Komponente C) ausschließlich aus Komponente C1) oder enthält neben Komponente C1) mindestens ein Polyetherpolyol aufgebaut aus Ethylenoxideinheiten, 1,2-Butylenoxideinheiten und/oder Tetramethylenoxideinheiten. Besonders bevorzugt ist es, wenn Komponente C) in Ausfuhrungsform i) ausschließlich aus Komponente C1) besteht, am meisten bevorzugt wenn Komponente C) in Ausfuhrungsform i) ausschließlich aus Komponente C1) besteht und das mindestens eine Polyetherpolyol C1) ein Polyetherpolyol aufgebaut aus Ethylenoxideinheiten und 1,2-Propylenoxideinheiten ist.

Bei dem mindestens einen Polyetherpolyol C2) handelt es sich um ein Polyetherpolyol aufgebaut aus 1,2-Propylenoxideinheiten, aus 1,3-Propylenoxideinheiten oder aus 1,2-Propylenoxideinheiten und 1,3-Propylenoxideinheiten, bevorzugt aus 1,2-Propylenoxideinheiten. Dies gilt für beide Ausfiihrungsformen ii) und iii).

In einer bevorzugten Ausfuhrungsform der Ausfuhrungsform ii) ist das mindestens eine Polyetherpolyol C1) ein Polyetherpolyol aufgebaut aus Ethylenoxideinheiten und 1,2-Propylenoxideinheiten und das mindestens eine Polyetherpolyol C2) ein Polyetherpolyol aufgebaut aus 1,2-Propylenoxideinheiten.

In einer bevorzugten Ausfuhrungsform der Ausfuhrungsform ii) besteht Komponente C) ausschließlich aus Komponente C1) und C2) oder enthält neben Komponente C1) und C2) mindestens ein Polyetherpolyol aufgebaut aus Ethylenoxideinheiten, 1,2-Butylenoxideinheiten und/oder Tetramethylenoxideinheiten. Besonders bevorzugt ist es, wenn Komponente C) in Ausfuhrungsform ii) ausschließlich aus Komponente C1) und C2) besteht, noch mehr bevorzugt wenn Komponente C) in Ausfuhrungsform ii) ausschließlich aus Komponente C1) und C2) besteht und das mindestens eine Polyetherpolyol C1) ein Polyetherpolyol aufgebaut aus Ethylenoxideinheiten und 1,2-Propylenoxideinheiten und das mindestens eine Polyetherpolyol C2) ein Polyetherpolyol aufgebaut aus 1,2-Propylenoxideinheiten ist.

In einer bevorzugten Ausfuhrungsform der Ausfuhrungsform iii) besteht Komponente C) ausschließlich aus Komponente C2) oder enthält neben Komponente C2) mindestens ein Polyetherpolyol aufgebaut aus Ethylenoxideinheiten, 1,2-Butylenoxideinheiten und/oder Tetramethylenoxideinheiten. Besonders bevorzugt ist es, wenn Komponente C) in Ausfuhrungsform iii) ausschließlich aus Komponente C2) besteht, am meisten bevorzugt wenn Komponente C) in Ausfuhrungsform iii) ausschließlich aus Komponente C2) besteht und das mindestens eine Polyetherpolyol C2) ein Polyetherpolyol aufgebaut aus 1,2-Propylenoxideinheiten ist.

Das Gesamtmolekulargewicht der Komponente C beträgt maximal ($\leq$) 1900 g/mol, bevorzugt ($\leq$) 1800 g/mol beträgt und mindestens ($>\_$) 1300 g/mol, bevorzugt ($>\_$) 1500 g/mol.

Geeignete Polyesterpolyole D) können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure. Die Dicarbonsäuren können einzeln oder als Gemische, z.B. in Form einer Bernstein- , Glutar- und Adipinsäuremischung, verwendet werden. Zur Herstellung der Polyesterpolyole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterpolyole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Poly-caprolactone. Die Polyesterpolyole besitzen zahlenmittlere Molekulargewichte von 500 bis 5000 g/mol und können einzeln oder in Form von Mischungen untereinander zur Anwendung kommen.

Polyesterpolyole werden in einer Menge von $\geq$ 0 bis $\leq$ 10 Gew.-%, bevorzugt von 0 Gew.-%, bezogen auf die Gesamtmenge von C) und D) eingesetzt.

Geeignete Katalysatoren E) für die TPU-Herstellung können die nach dem Stand der Technik bekannten und üblichen tertiären Amine sein, wie z.B. Triethylamin, Dimethylcyclohexylamin, N-Methylmorpholin, N,N'-Dimethyl-piperazin, 2-(Dimethylamino-ethoxy)-ethanol, Diazabicyclo-(2,2,2)-octan sowie vorzugsweise organische Metallverbindungen, wie beispielsweise Titansäureester, Eisenverbindungen, Zinnverbindungen, wie z.B. Zinndiacetat, Zinndioctoat, Zinndilaurat oder die Zinndialkylsalze aliphatischer Carbonsäuren, wie z.B. Dibutylzinndiacetat, Dibutylzinndilaurat. Besonders bevorzugte Katalysatoren sind organische Metallverbindungen, insbesondere Titansäureester, Eisen- oder Zinnverbindungen.

Neben den TPU-Komponenten und den Katalysatoren können auch andere Hilfsmittel und/oder Zusatzstoffe F) zugesetzt werden. Genannt seien beispielsweise Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe und Verstärkungsmittel. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag, München 1989, oder DE-A 29 01 774.

Weiterhin zur Einarbeitung geeignet sind handelsübliche Weichmacher wie Phosphate, Adipate, Sebacate und Alkylsulfonsäureester.

Ebenso können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Die erfindungsgemäßen TPU können kontinuierlich im sogenannten Extruderverfahren, z.B. in einem Mehrwellenextruder, hergestellt werden. Die Dosierung der TPU-Komponenten A), B), C) und D) nacheinander, d.h. nach einem Prepolymer-Verfahren, erfolgen. Dabei kann das Prepolymer sowohl batchweise vorgelegt, als auch kontinuierlich in einem Teil des Extruders oder in einem separaten vorgeschalteten Prepolymeraggregat hergestellt werden.

Gegenstand der Erfindung ist auch die Herstellung der erfindungsgemäßen TPU wobei die Komponenten A) bis F) zur Reaktion gebracht werden.

Gegenstand der Erfindung ist auch die kontinuierliche Herstellung der erfindungsgemäßen TPU im Extruderverfahren, wobei die Dosierung der TPU-Komponenten A), B), C) und D) nacheinander, d.h. nach einem Prepolymer-Verfahren, erfolgt.

Gegenstand der Erfindung ist darüberhinaus die Verwendung der erfindungsgemäßen TPU zur Herstellung von Filmen, Folien und Beschichtungen.

Ein weiterer Gegenstand der Erfindung sind wasserdampfdurchlässige, flächige Verbundteile umfassend mindestens zwei Schichten, wobei mindestens eine Schicht aus dem oben beschriebenen erfindungsgemäßen thermoplastischen Polyurethan besteht.

Ebenfalls Gegenstand der Erfindung sind wasserdampfdurchlässige flächige Verbundteile umfassend mindestens zwei Schichten, wobei mindestens eine Schicht (i) nicht aus thermoplastischem Polyurethan besteht und mindestens eine Schicht (ii) aus dem erfindungsgemäßen thermoplastischem Polyurethan besteht.

Bevorzugt weist die TPU-Schicht eine Schichtdicke von 30 bis 150 $\mu$m auf.

Als weitere Schicht oder Schichten des Verbundteils werden vorzugsweise Vliese oder Textilien eingesetzt. Diese Schichten können einseitig oder beidseitig auf der Schicht aus TPU angeordnet sein; oder das TPU kann ein oder beidseitig auf der weiteren Schicht des Verbundteils angeordnet werden.

Die erfindungsgemäßen Verbundteile können als oder zur Herstellung von Dachunterspannbahnen und Fassadenspannbahnen verwendet werden.

Die Erfindung soll anhand der nachfolgenden Beispiele näher erläutert werden.

**Beispiele**

**TPU-Herstellung**

**Laboransätze (GA)**

In einem Reaktionsgefäß wurden 100 Gew.-Teile Polyol mit einer Temperatur von 200°C, in dem die Additive gelöst waren, vorgelegt. Kurz vor Start der Reaktion wurde die entsprechende Menge Katalysator zugegeben. Anschließend wurde (siehe Tabelle 1) die entsprechenden Menge 60°C warmes Diphenylmethandiisocyanat (MDI) zugegeben, sodass einen Kennzahl von 1,01 bezogen auf das ganze TPU eingestellt wurde. 30 sec. nach Erreichen der Maximaltemperatur der Prepolymers wurde die entsprechende Mange 60 °C warmes 1,4-Butandiol (BDO) zugegeben die gesamte Reaktionsmischung 15 bis 35 Sekunden lang intensiv gerührt. Anschließend wurde die viskose Reaktionsmischung auf ein beschichtetes Blech gegossen und bei 80°C 30 Minuten nachgetempert. Die erhaltenen Gießplatten wurden geschnitten und granuliert.

**Kontinuierliche TPU-Herstellung (RE)**

In einer kontinuierlichen TPU-Reaktion wurden in einem Rohrmischer/Extruder (Extruder ZSK 53, Fa. Werner/Pfleiderer) nach dem bekannten Prepolymerfahren, wie es in EP-A 571 830 und EP-A 571 828 beschrieben ist, das TPU hergestellt. Die Gehäusetemperaturen der 13 Gehäuse lagen bei 100°C bis 220°C. Die Drehzahl der Schnecke war auf 290 U/min eingestellt. Die Gesamtdosierung lag bei 75 kg/h. Das TPU wurde als Schmelzestrang extrudiert, in Wasser abgekühlt und granuliert.

Zu allen Ansätzen wurden je 0,5 Gew.-% Irganox 1010 (BASF) ; 0,3 Gew.-% Waradur E Völpker); 0,335 Gew.-% Tinuvin 234 (BASF); 0,225 Gew.-% Tinuvin 622 (BASF) und 0,03 Gew.-% Triphenylphosphin gegeben.

Verwendete Rohstoffe:

| Polyol A | Desmophen VP PU DE25IK07 (OH-Zahl: 55,9-56,7 mg KOH/g, auf 1,2-Propylenglykol gestarteter bifunktioneller Polyether aufgebaut aus Ethylenoxid und Propylenoxid mit einem Ethylenoxid-Cap (ca. 10 Gew.-%), einem Ethylenoxidanteil von ca. 50 Gew.-% und mit 60-70% primären Hydroxylendgruppen); Versuchsprodukt der Covestro AG, Leverkusen, DE (PolA) |

| --- | --- |
| Polyol B | Acclaim® Polyol 2200 N (OH-Zahl: 56,1-56,7 mg KOH/g, Poly(1,2-Propylenglykol))); Covestro AG, Leverkusen, DE (PolB) |
| Polyol C | Desmophen 1110 BD (OH-Zahl: 112 -113 mg KOH/g; Poly(1,2-Propylenglykol))); Covestro AG, Leverkusen, DE (PolC) |
| MDI | Desmodur® 44 M (4,4'-Diphenylmethandiisocyanat); Bayer MaterialScience AG, Leverkusen, DE |
| BDO | 1,4-Butandiol; BASF SE, Ludwigshafen, DE |
| Katalysator | Tyzor AA-105; Dorf Ketal |

**Tabelle 1:** Herstellung von TPU

| | Verfahren | Mn[a] | PolB[##] | PolA[##] | PolC[##] | EOGehalt | Kat[#] | BDO** | HDO** | TH | Kennzahl |
| --- | --- | --- | --- | --- | --- | --- | --- | --- | --- | --- | --- |
| 1 | GA* | 1201 | | 33,33 | 66,6 | 16,665 | 5 | 80 | 20 | 35,0 | 1,01 |
| 2 | GA* | 2000 | 50 | 50 | 0 | 25 | 5 | 100 | 0 | 28,0 | 1,01 |
| 3 | RE* | 2000 | 70 | 30 | 0 | 15 | 20 | 100 | 0 | 32,0 | 1 |
| 4 | RE* | 2000 | 70 | 30 | 0 | 15 | 20 | 95 | 5 | 32,0 | 1 |
| 5 | GA* | 1605 | 55,4 | 20 | 24,6 | 10 | 5 | 100 | 0 | 35,0 | 1,01 |
| 6 | RE* | 2000 | 80 | 20 | 0 | 10 | 20 | 100 | 0 | 28,0 | 1 |
| 7 | RE* | 2500 | 70 | 10 | 0 | 5 | 20 | 100 | 0 | 28,0 | 1 |
| 8 | RE* | 2000 | 90 | 10 | 0 | 5 | 10 | 90,8 | 9,2 | 36,0 | 1 |
| 9 | GA | 1605 | 55,4 | 20 | 24,6 | 10 | 5 | 100 | 0 | 32,0 | 1,01 |
| 10 | GA | 1504 | 47 | 20 | 33 | 10 | 5 | 100 | 0 | 28,0 | 1,01 |
| 11 | GA | 1807 | 69,3 | 20 | 10,7 | 10 | 5 | 100 | 0 | 28,0 | 1,01 |
| 12 | RE | 1709 | 60 | 23 | 17 | 11,5 | 20 | 100 | 0 | 28 | 1 |
| 13 | GA | 1604 | 65,3 | 10 | 24,7 | 5 | 5 | 100 | 0 | 28,0 | 1,01 |
| 14 | GA | 1600 | 75 | 0 | 25 | 0 | 5 | 100 | 0 | 28,0 | 1,01 |
| * Vergleichsbeispiele, GA = Gießansatz, RE = Reaktionsextrusion<br>* * [mol% auf Kettenverlängerer]<br>#[ppm auf TPU]<br>##[Gew.-% auf Polyolmischung]<br>[a] Polyolmischung [g/mol] | | | | | | | | | | | |

**TPU-Folien-Herstellung:**

Die TPU-Granulate 1 bis 14 wurden jeweils in einem Einwellen-Extruder (Einwellen-Extruder 30/25D Plasticorder PL 2100-6, Fa.Brabender) aufgeschmolzen (Dosierung ca. 3 kg/h; 185-215°C) und durch eine Breitschlitzdüse jeweils zu einer Flachfolie (ca. 70 μm )extrudiert.

**Messung der Wasserdampfdurchlässigkeit bzw. der wasserdampfdiffusionsäquivalenten Luftschichtdicke (SD-Wert [m]) der eingesetzten TPU Folie:**

Die Messung des sd.-Werts wird in Anlehnung an DIN EN ISO 12572:2017-05 nach Satz B (23 °C und relative Luftfeuchtigkeit von 0% bzw. 85%) an einer 70 μm Folie durchgeführt.

Der SD Wert soll < 0,2 m sein

**Quellung:**

Die Quellung des Materials wurde an Spritzgussplatten (12,5 cm * 5 cm * 2mm) in Wasser bestimmt.
Dazu bestimmt man die Gewichtszunahme nach einer 48 h Lagerung in
Wasser bei 23°C und bei 3,5 °C

**Bestimmung des Chunkingverhaltens bei der Herstellung einer Folie:**

Zur Prüfung der Chunkingneigung eines Materials wird das Material extrudiert. Danach wird der Extruder leergefahren und mind. 45 min bei Extrusionstemperatur -100°C stehen gelassen. Nach erneutem aufheizen auf Extrusionstemperatur wird die Extrusion wieder aufgenommen und die Qualität der Schmelze beurteilt. Das Chunking äußert sich dadurch, dass nach längerem Stillstand des Extruders bei Wiederanfahrt neben der üblichen abgebauten Polymerschmelze ein klumpen- oder schollenähnliches Material ausgespült wird und auch nach längerme Spühlen mit Polymerschmelze noch vorhanden ist.
Ist die Schmelzequalität gut ist die Bewertung i.O. (in Ordnung)
Ist die Schmelzequalität schlecht ist die Bewertung n.i.O. (nicht in Ordnung)

**Tabelle 2:** Wasserdampfdurchlässigkeit (WDD) und Quellung und Chunking-Verhalten

| | Quelltest 48h bei 23°C Gew.Zunahme [%] | 3,5°C | SDValue | Chunking [i.O. / n.i.O.]] |
|---|---|---|---|---|
| 1 | 2,2 | 1,1 | 0,27 | i.O. |
| 2 | 7,3 | 31,1 | 0,08 | i.O. |
| 3 | 2,6 | 1,5 | 0,13 | n.i.O. |
| 4 | 3,0 | 2,3 | 0,13 | n.i.O. |
| 5 | 1,6 | 0,6 | 0,19 | n.i.O. |
| 6 | 2,8 | 1,9 | 0,11 | n.i.O. |
| 7 | 2,3 | 1,6 | 0,12 | n.i.O. |
| 8 | 1,3 | 0,5 | 0,14 | n.i.O. |
| 9 | 2,0 | 0,8 | 0,16 | i.O. |
| 10 | 2,5 | 1,2 | 0,15 | i.O. |
| 11 | 2,2 | 1,6 | 0,13 | i.O. |
| 12 | 3,2 | 2,3 | 0,13 | i.O. |
| 13 | 1,9 | 1,1 | 0,14 | i.O. |
| 14 | 1,6 | 0,9 | 0,18 | i.O. |
| * Vergleichsbeispiele, GA = Gießansatz, RE = Reaktionsextrusion | | | | |

Die erfindungsgemäß eingesetzten TPU zeigen gute Wasserdampfdurchlässigkeit bei gleichzeitig geringer Quellung (siehe Tabelle 2).
Es war somit möglich, mittels spezieller TPU-Folien auf Basis vergleichsweise kostengünstiger und sich durch einen geringen $CO_2$-Fußabdruck auszeichnenden Rohstoffe ausreichender Reaktivität Verbundteile mit guten Wasserdampfdurchlässigkeiten sowie ausreichenden mechanischen Eigenschaften herzustellen, wobei die gleichzeitig niedrige Quellung der eingesetzten TPU-Folien deren Einsatz in flächigen Verbundteilen ermöglicht.

**Patentansprüche**

**1.** Thermoplastisches Polyurethan, erhältlich aus der Umsetzung einer Zusammensetzung bestehend aus den Komponenten:

A) einem oder mehreren organischen Diisocyanaten,
B) einem oder mehreren Diolen mit jeweils einem Molekulargewicht von ≥ 60 bis ≤ 490 g/mol als Kettenverlängerer,

C)

i) einem oder mehreren Polyetherpolyolen mit jeweils einem zahlenmittleren Molekulargewicht von $\geq$ 500 bis $\leq$ 5000 g/mol, von denen mindestens ein Polyetherpolyol (C1) aus Ethylenoxid- und Propylenoxideinheiten aufgebaut ist, wobei i) kein Polyetherpolyol (C2) enthält, das aus Propylenoxideinheiten aufgebaut ist,
ii) mehreren Polyetherpolyolen mit jeweils einem zahlenmittleren Molekulargewicht von $\geq$ 500 bis $\leq$ 5000 g/mol, von denen mindestens ein Polyetherpolyol (C1) aus Ethylenoxid- und Propylenoxideinheiten aufgebaut ist und mindestens ein Polyetherpolyol (C2) aus Propylenoxideinheiten aufgebaut ist,
oder
iii) einem oder mehreren Polyetherpolyolen mit jeweils einem zahlenmittleren Molekulargewicht von $\geq$ 500 bis $\leq$ 5000 g/mol, von denen mindestens ein Polyetherpolyol (C2) aus Propylenoxideinheiten aufgebaut ist, wobei iii) kein Polyetherpolyol (C1) enthält, das aus Ethylenoxid- und Propylenoxideinheiten aufgebaut ist,

wobei die zahlenmittlere Funktionalität der Komponente C) von $\geq$ 1,8 bis $\leq$ 2,5 beträgt,
D) gegebenenfalls einem oder mehreren Polyesterpolyolen mit jeweils einem zahlenmittleren Molekulargewicht von $\geq$ 500 bis $\leq$ 5000 g/mol, wobei die zahlenmittlere Funktionalität der Komponente D) von $\geq$ 1,8 bis $\leq$ 2,5 beträgt,
E) gegebenenfalls einem oder mehreren Katalysatoren,
F) gegebenenfalls einem oder mehreren Hilfs- und/oder Zusatzstoffen,
wobei das Molverhältnis der NCO-Gruppen in A) zu den NCO-reaktiven Gruppen in B), C) und D) von $\geq$ 0,9:1 bis $\leq$ 1,1:1 beträgt,

**dadurch gekennzeichnet,**

**dass** der Gehalt an Ethylenoxideinheiten in der Komponente C)

- in den Ausführungsformen i) und ii) von > 0 bis $\leq$ 20 Gew.-%, bevorzugt von > 0 bis $\leq$ 17 Gew.-%, besonders bevorzugt von > 0 bis $\leq$ 15 Gew.-%, bezogen auf das Gesamtgewicht der Komponente C), beträgt, und
- in Ausführungsform iii) von $\geq$ 0 bis $\leq$ 20 Gew.-%, bevorzugt von $\geq$ 0 bis $\leq$ 15 Gew.-%, besonders bevorzugt 0 Gew.-%, bezogen auf das Gesamtgewicht der Komponente C), beträgt,

**dass** das Gesamtmolekulargewicht der Komponente C) $\leq$ 1900 g/mol, bevorzugt $\leq$ 1800 g/mol beträgt,
und **dass** das thermoplastische Polyurethan eine Theoretische Härte (TH) im Bereich von $\geq$ 17 bis $\leq$ 39, bevorzugt 20 bis 36, besonders bevorzugt 24 bis 34 aufweist,
wobei die zahlenmittleren Molekulargewichte der einzelnen Polyetherpolyole bzw. Polyesterpolyole der Komponenten C) und D), der Gehalt an Ethylenoxideinheiten in der Komponente C), das Gesamtmolekulargewicht der Komponente C) und die Theoretische Härte bestimmt werden gemäß den Ausführungen in der Beschreibung.

2. Thermoplastisches Polyurethan gemäß Anspruch 1, wobei es sich bei Komponente A) um ein oder mehrere Diisocyanate ausgewählt aus der Gruppe 4,4'-Diphenylmethandiisocyanat, Isophorondiisocyanat, 1,6-Hexamethylendiisocyanat, 1,5-Naphthylendiisocyanat und 4,4'-Dicyclohexylmethandiisocyanat handelt.

3. Thermoplastisches Polyurethan gemäß einem der Ansprüche 1 oder 2, wobei es sich bei dem dem mindestens einen Polyetherpolyol C1) in Ausführungsform i) oder ii) um ein Polyetherpolyol aufgebaut aus Ethylenoxideinheiten und 1,2-Propylenoxideinheiten, aus Ethylenoxideinheiten und 1,3-Propylenoxideinheiten oder aus Ethylenoxideinheiten, 1,3-Propylenoxideinheiten und 1,2-Propylenoxideinheiten, bevorzugt aus Ethylenoxideinheiten und 1,2-Propylenoxideinheiten, handelt.

4. Thermoplastisches Polyurethan gemäß einem der Ansprüche 1 bis 3, wobei in Ausführungsform i) Komponente C) ausschließlich aus Komponente C1) besteht oder neben Komponente C1) mindestens ein Polyetherpolyol aufgebaut aus Ethylenoxideinheiten, 1,2-Butylenoxideinheiten und/oder Tetramethylenoxideinheiten enthält.

5. Thermoplastisches Polyurethan gemäß einem der Ansprüche 1 bis 3, wobei es sich bei dem mindestens einen Polyetherpolyol C2) in Ausführungsform ii) um ein Polyetherpolyol aufgebaut aus 1,2-Propylenoxideinheiten, aus 1,3-Propylenoxideinheiten oder aus 1,2-Propylenoxideinheiten und 1,3-Propylenoxideinheiten, bevorzugt aus 1,2-Propylenoxideinheiten, handelt.

6. Thermoplastisches Polyurethan gemäß einem der Ansprüche 1 bis 3, oder Anspruch 5, wobei in Ausführungsform ii) das mindestens eine Polyetherpolyol C1) ein Polyetherpolyol aufgebaut aus Ethylenoxideinheiten und 1,2-Propylenoxideinheiten und das mindestens eine Polyetherpolyol C2) ein Polyetherpolyol aufgebaut aus 1,2-Propylenoxideinheiten ist.

7. Thermoplastisches Polyurethan gemäß einem der Ansprüche 1 bis 3, oder Anspruch 5 oder 6, wobei in Ausführungsform ii) Komponente C) ausschließlich aus Komponente C1) und C2) besteht oder neben Komponente C1) und C2) mindestens ein Polyetherpolyol aufgebaut aus Ethylenoxideinheiten, 1,2-Butylenoxideinheiten und/oder Tetramethylenoxideinheiten enthält.

8. Thermoplastisches Polyurethan gemäß einem der Ansprüche 1 bis 3, wobei es sich bei dem mindestens einen Polyetherpolyol C2) in Ausführungsform iii) um ein Polyetherpolyol aufgebaut aus 1,2-Propylenoxideinheiten, aus 1,3-Propylenoxideinheiten oder aus 1,2-Propylenoxideinheiten und 1,3-Propylenoxideinheiten, bevorzugt aus 1,2-Propylenoxideinheiten, handelt.

9. Thermoplastisches Polyurethan gemäß einem der Ansprüche 1 bis 3, oder Anspruch 8, wobei in der Ausführungsform iii) Komponente C) ausschließlich aus Komponente C2) besteht oder neben Komponente C2) mindestens ein Polyetherpolyol aufgebaut aus Ethylenoxideinheiten, 1,2-Butylenoxideinheiten und/oder Tetramethylenoxideinheiten enthält.

10. Thermoplastisches Polyurethan gemäß einem der Ansprüche 1 bis 9, wobei das Gesamtmolekulargewicht der Komponente C mindestens $\geq$ 1300 g/mol, bevorzugt $\geq$ 1500 g/mol beträgt.

11. Verfahren zur Herstellung eines thermoplastischen Polyurethans, wobei eine Zusammensetzung bestehend aus den Komponenten:

A) einem oder mehreren organischen Diisocyanaten,
B) einem oder mehreren Diolen mit jeweils einem Molekulargewicht von $\geq$ 60 bis $\leq$ 490 g/mol als Kettenverlängerer,
C) i) einem oder mehreren Polyetherpolyolen mit jeweils einem zahlenmittleren Molekulargewicht von $\geq$ 500 bis $\leq$ 5000 g/mol, von denen mindestens ein Polyetherpolyol (C1) aus Ethylenoxid- und Propylenoxideinheiten aufgebaut ist, wobei i) kein Polyetherpolyol (C2) enthält, das aus Propylenoxideinheiten aufgebaut ist,

ii) mehreren Polyetherpolyolen mit jeweils einem zahlenmittleren Molekulargewicht von $\geq$ 500 bis $\leq$ 5000 g/mol, von denen mindestens ein Polyetherpolyol (C1) aus Ethylenoxid- und Propylenoxideinheiten aufgebaut ist und mindestens ein Polyetherpolyol (C2) aus Propylenoxideinheiten aufgebaut ist, oder
iii) einem oder mehreren Polyetherpolyolen mit jeweils einem zahlenmittleren Molekulargewicht von $\geq$ 500 bis $\leq$ 5000 g/mol, von denen mindestens ein Polyetherpolyol (C2) aus Propylenoxideinheiten aufgebaut ist, wobei iii) kein Polyetherpolyol (C1) enthält, das aus Ethylenoxid- und Propylenoxideinheiten aufgebaut ist, wobei die zahlenmittlere Funktionalität der Komponente C) von $\geq$ 1,8 bis $\leq$ 2,5 beträgt,

D) gegebenenfalls einem oder mehreren Polyesterpolyolen mit jeweils einem zahlenmittleren Molekulargewicht von $\geq$ 500 bis $\leq$ 5000 g/mol, wobei die zahlenmittlere Funktionalität der Komponente D) von $\geq$ 1,8 bis $\leq$ 2,5 beträgt,
E) gegebenenfalls einem oder mehreren Katalysatoren,
F) gegebenenfalls einem oder mehreren Hilfs- und/oder Zusatzstoffen,
wobei das Molverhältnis der NCO-Gruppen in A) zu den NCO-reaktiven Gruppen in B), C) und D) von $\geq$ 0,9:1 bis $\leq$ 1,2:1 beträgt,
**dadurch gekennzeichnet,**
**dass** der Gehalt an Ethylenoxideinheiten in der Komponente C)

- in den Ausführungsformen i) und ii) von > 0 bis $\leq$ 20 Gew.-%, bevorzugt von > 0 bis $\leq$ 17 Gew.-%, besonders bevorzugt von > 0 bis $\leq$ 15 Gew.-%, bezogen auf das Gesamtgewicht der Komponente C), beträgt, und
- in Ausführungsform iii) von $\geq$ 0 bis $\leq$ 20 Gew.-%, bevorzugt von $\geq$ 0 bis $\leq$ 15 Gew.- %, besonders bevorzugt 0 Gew.-%, bezogen auf das Gesamtgewicht der Komponente C), beträgt,

**dass** das Gesamtmolekulargewicht der Komponente C) $\leq$ 1900 g/mol, bevorzugt $\leq$ 1800 g/mol beträgt,
und **dass** das thermoplastische Polyurethan eine Theoretische Härte (TH) im Bereich von $\geq$ 17 bis $\leq$ 39, bevorzugt 20 bis 36, besonders bevorzugt 24 bis 34 aufweist,

wobei die zahlenmittleren Molekulargewichte der einzelnen Polyetherpolyole bzw. Polyesterpolyole der Komponenten C) und D), der Gehalt an Ethylenoxideinheiten in der Komponente C), das Gesamtmolekulargewicht der Komponente C) und die Theoretische Härte bestimmt werden gemäß den Ausführungen in der Beschreibung,

umgesetzt wird.

12. Verwendung eines thermoplastischen Polyurethans gemäß einem der Ansprüche 1 bis 10 zur Herstellung von Filmen, Folien und Beschichtungen.

13. Wasserdampfdurchlässiges, flächiges Verbundteil umfassend mindestens zwei Schichten, wobei mindestens eine Schicht aus einem thermoplastischen Polyurethan gemäß einem der Ansprüche 1 bis 10 besteht.

14. Wasserdampfdurchlässiges, flächiges Verbundteil gemäß Anspruch 13, wobei mindestens eine Schicht ein Vlies oder ein Textil ist.

15. Verwendung eines flächigen Verbundteils gemäß Anspruch 12 oder 13 als oder zur Herstellung von Dachunterspannbahnen und Fassadenspannbahnen.

Europäisches
Patentamt
European
Patent Office
Office européen
des brevets

# EUROPÄISCHER RECHERCHENBERICHT

Nummer der Anmeldung

EP 24 22 2060

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 3 812 409 A1 (COVESTRO INTELLECTUAL PROPERTY GMBH & CO KG [DE]) 28. April 2021 (2021-04-28) * Absätze [0001], [0066] - Absatz [0079]; Ansprüche 1-24 * * Absatz [0088] - Absatz [0096]; Beispiel 3; Tabelle 1 * ----- | 1-15 | INV. C08G18/48 C08G18/22 B32B15/14 B32B27/40 C08G18/32 C08G18/66 C08G18/76 |
| A | EP 4 342 924 A1 (COVESTRO DEUTSCHLAND AG [DE]) 27. März 2024 (2024-03-27) * Absatz [0001]; Ansprüche 1-15 * * Absatz [0049] - Absatz [0060]; Beispiele; Tabelle 1 * ----- | 1-15 | C08G18/08 C08J5/18 ADD. C09D175/08 |
| A,D | WO 2016/005300 A1 (COVESTRO DEUTSCHLAND AG [DE]) 14. Januar 2016 (2016-01-14) * Seite 1, Zeile 2 - Zeile 4; Ansprüche 1-14 * * Seite 10, Zeile 1 - Seite 13, Zeile 14; Beispiele; Tabellen 1-3 * * Beispiele 11, 16; Tabelle 1 * ----- | 1-15 | |

**RECHERCHIERTE SACHGEBIETE (IPC)**

C08G
B32B
C08J
C09D

Der vorliegende Recherchenbericht wurde für alle Patentansprüche erstellt

| Recherchenort | Abschlußdatum der Recherche | Prüfer |
|---|---|---|
| München | 8. Mai 2025 | Paulus, Florian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-05-2025

| Im Recherchenbericht angeführtes Patentdokument | Datum der Veröffentlichung | Mitglied(er) der Patentfamilie | | Datum der Veröffentlichung |
|---|---|---|---|---|
| EP 3812409 A1 | 28-04-2021 | CN | 112694589 A | 23-04-2021 |
| | | EP | 3812407 A1 | 28-04-2021 |
| | | EP | 3812409 A1 | 28-04-2021 |
| | | US | 2021122918 A1 | 29-04-2021 |
| EP 4342924 A1 | 27-03-2024 | CN | 119768446 A | 04-04-2025 |
| | | EP | 4342924 A1 | 27-03-2024 |
| | | TW | 202428676 A | 16-07-2024 |
| | | WO | 2024068411 A1 | 04-04-2024 |
| WO 2016005300 A1 | 14-01-2016 | CN | 106660341 A | 10-05-2017 |
| | | EP | 3166790 A1 | 17-05-2017 |
| | | RU | 2017104436 A | 21-09-2018 |
| | | TW | 201609396 A | 16-03-2016 |
| | | US | 2017182754 A1 | 29-06-2017 |
| | | WO | 2016005300 A1 | 14-01-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2000039179 A
- EP 1366100 A
- US 4202957 A
- EP 0881244 A
- WO 2008007046 A
- EP 0748828 A
- WO 2016005300 A1
- EP 3166792 B1
- DE 2901774 A
- EP 571830 A
- EP 571828 A

**In der Beschreibung aufgeführte Nicht-Patentliteratur**

- *Kunststoffe*, 1978, vol. 68, 819-825
- *Kautschuk, Gummi, Kunststoffe*, 1982, vol. 35, 568-584
- *Justus Liebigs Annalen der Chemie*, vol. 562, 75-136
- High Polymers. **J.H. SAUNDERS** ; **K.C. FRISCH**. Polyurethane. Interscience Publishers, 1962, vol. XVI
- Taschenbuch der Kunststoff-Additive. Hanser Verlag, 1989